# EUROPEAN PATENT APPLICATION

(11) **EP 2 302 730 A1**
(43) Date of publication of application: **30.03.2011**
(21) Application number: 09766353.8
(22) Date of filing: 07.04.2009
(51) Int. Cl.: H01P 1/06, G01S 7/03, G01S 13/93, H01P 1/04, H01Q 3/32

(54) **HIGH FREQUENCY WAVEGUIDE, ANTENNA DEVICE, AND ELECTRONIC APPARATUS WITH ANTENNA DEVICE**

(30) Priority: 16.06.2008 JP 2008156173; 16.06.2008 JP 2008156175; 16.06.2008 JP 2008156176; 23.06.2008 JP 2008162915
(71) Applicant: Panasonic Corporation, Kadoma-shi Osaka 571-8501 (JP)
(72) Inventor: KIRINO, Hideki, Osaka-shi Osaka 540-6207 (JP); WATANABE, Masashi, Osaka-shi Osaka 540-6207 (JP); YAMAMOTO, Isao, Osaka-shi Osaka 540-6207 (JP)
(74) Representative: Eisenführ, Speiser & Partner
(86) International application number: PCT/JP2009/001620
(87) International publication number: WO 2009/153905

(57) **Abstract**

In a waveguide structure (8), a movable waveguide component (10) and an immovable waveguide component (12) are opposed at a predetermined interval. Further, at least either the movable waveguide component (10) or the immovable waveguide component (12) includes grooves (13, 29) opened towards the waveguide component opposed thereto (10, 12). Protrusions (44) are formed outside of at least one of the grooves (13, 29). The protrusions (44) respectively have a height of roughly λ/4 (where λ is a wavelength of radio waves to be used).

## Description

### TECHNICAL FIELD

The present invention relates to a high frequency waveguide, an antenna device, and an electronic apparatus with the antenna device.

### BACKGROUND ART

The high frequency waveguide is normally used as a path of radio waves. The high frequency waveguide is formed by combining first and second waveguide components.

Specifically, the high frequency waveguide is formed by integrating the first and second waveguide components under a condition that openings of grooves formed on the first and second waveguide components are matched. It should be noted that the following Patent Literature 1 describes a technology related to this.

In addition, a radar device has been recently installed in the automobiles for collision avoidance and inter-vehicle distance control. The radar device is configured to obtain a detection angular range for measurement even when the automobile rounds a curve. The detection angular range includes a right angle of 15 degrees and a left angle of 15 degrees (i.e., totally 30 degrees)

The following is one of the methods of obtaining the detection angular range. An antenna is disposed in front of a transceiver through a waveguide component while being configured to move right and left with respect to the waveguide component. It should be noted that the following Patent Literature 2 (Japan Laid-open Patent Application Publication No. JP-A-2002-223113) describes a technology related to this.

### CITATION LIST

### PATENT LITERATURE

Patent Literature 1: Japan Laid-open Patent Application Publication No. JP-A-2004-048486
Patent Literature 2: Japan Laid-open Patent Application Publication No. JP-A-2002-223113

### SUMMARY

The aforementioned well-known examples have a drawback that radio waves leak out of the first and second waveguide components.

Specifically, each of the first and second waveguide components includes a flange disposed on the outer periphery of the opening of the groove thereof forming the waveguide. The first and second waveguide components are integrated by welding the flanges or fixing the flanges by means of screws. However, a clearance may be formed between the flanges by mistake in the integration operation. In this case, radio waves may leak out of the clearance.

In view of the above, the present invention addresses a need to effectively inhibit radio waves from leaking out of the waveguide.

On the other hand, the aforementioned well-known examples have a drawback that the antenna device is formed in a large size.

Specifically, it is inevitable for the antenna to be formed in a remarkably large size for obtaining a large detection angular range including right and left angles respectively having roughly 15 degrees. Further, a driving space is required for driving the large antenna right and left. The antenna device is consequently formed in a remarkably large size due to the configuration of the large antenna and the driving space.

The automobiles have been recently formed in compact sizes, for instance, for coping with energy saving. It is not preferable in this tide to form the antenna device in a large size even for safety reasons. In other words, the antenna device is required to be formed in a small size.

In view of the above, the present invention addresses a need to compactly form the antenna device with a simple structure.

A high frequency waveguide according to the present invention includes first and second waveguide components, an opened groove/grooves, and a plurality of protrusions. The first and second waveguide components are opposed each other at a predetermined interval of less than λ/4 (where λ is a wavelength of radio waves to be used). The opened groove is formed on at least either of opposed surfaces of the first and second waveguide components. The protrusions are formed on at least either of the opposed surfaces of the first and second waveguide components while being disposed in a surrounding of the groove formed on at least either of the first and second waveguide components. The protrusions respectively have a height of roughly λ/4.

In short, the protrusions, respectively having a height of roughly λ/4 (where λ is a wavelength of radio waves to be used), are disposed in the outer periphery of the groove. Even when a predetermined interval (of less than λ/4) is produced between the first and second waveguide components while the groove is opened to the interval, the protrusions disposed outside the opening allow an electric field to be generated in clearances among the protrusions in a direction parallel to a top plane formed by the protruded ends of the protrusions, but prevents an electric field from being generated in clearances among the protrusions in a direction perpendicular to the top plane of the protrusions. Especially, leakage of radio waves out of the waveguide is greatly inhibited by the condition that an electric field is prevented from being generated in the direction perpendicular to the top plane of the protrusions.

Next, a high frequency waveguide of another aspect of the present invention relates to the high frequency waveguide for thus greatly inhibiting leakage of radio waves. In the high frequency waveguide, the groove is formed on the first waveguide component, whereas the protrusions are disposed on the second waveguide component while being opposed to the groove and a surrounding of the groove. The protrusions respectively have a height of roughly λ/4 (where λ is a wavelength of radio waves to be used. The phase of the radio waves can be stabilized while propagating through the waveguide, even when the first and second waveguide components are moved in a direction perpendicular to the waveguide axis.

In other words, the top plane of the protrusions respectively having a height of roughly λ/4 (where λ is a wavelength of radio waves to be used) functions as a magnetic wall for allowing an electric field to be generated in the clearances among the protrusions in a direction parallel to the top plane of the protrusions but preventing an electric field from being generated in the clearances among the protrusions in a direction perpendicular to the top plane of the protrusions. Therefore, the waveguide can be formed only by the groove formed on either of the first and second waveguide components. Further, the protrusions, respectively having a height of roughly λ/4, are uniformly expanded on a plane arranged along a direction perpendicular to a direction parallel to the waveguide axis. Therefore, a condition is achieved that a stable magnetic wall is constantly generated in front of the opening even when the first and second waveguide components are relatively displaced in a direction perpendicular to the waveguide axis. In other words, it is possible to stabilize the phase of the radio waves propagating through the waveguide. This results in formation of a high frequency waveguide less influenced by accuracy of a position of the groove.

An antenna device according to the present invention includes an antenna, a waveguide structure, and a transceiver. The antenna includes a first transceiver port and a second transceiver port. The waveguide structure is disposed behind the antenna. The waveguide structure forms a waveguide having a variable waveguide length between the first transceiver port and the second transceiver port. The transceiver is disposed behind the antenna through the waveguide structure. The transceiver is configured to emit and receive radio waves outputted from or inputted into the first and second transceiver ports of the antenna.

The waveguide structure is thus formed for changing the waveguide length. To change the waveguide length, the antenna is herein configured to be immovable whereas the waveguide structure, disposed behind the antenna, is configured to be movable. A wide detection angular range can be thereby obtained. Consequently, the antenna device can be formed in a smaller size than the well-known antennas configured to be entirely movable.

### BRIEF DESCRIPTION OF DRAWINGS

Fig.1 is a perspective view of an automobile that an exemplary embodiment of the present invention is applied.
Fig.2 is a perspective view of an antenna device according to the exemplary embodiment of the present invention.
Fig.3 is an exploded perspective view of the antenna device.
Fig.4 is a perspective view of an immovable waveguide component and a plate component in the antenna device.
Fig.5 is a perspective view of the immovable waveguide component.
Fig.6 is another perspective view of the immovable waveguide component.
Fig.7 is a front view of a movable waveguide component of the antenna device.
Fig.8 is a perspective view of another immovable waveguide component of the antenna device.
Fig.9 is another perspective view of the immovable waveguide component in Fig.8.
Fig.10 is a perspective view of an antenna of the antenna device.
Fig.11 is an exploded perspective view of a movable waveguide section of the antenna device.
Fig.12 is a plan view of a magnetic circuit of the movable waveguide component section.
Fig.13 is a front view of the movable waveguide section.
Fig.14 is a waveform chart in an operation of the antenna device.
Fig.15 is a diagram illustrating a characteristic part of the antenna device.
Fig.16 is a diagram illustrating another exemplary embodiment of the present invention.
Fig.17 is a perspective view illustrating another exemplary embodiment of the present invention in Fig.16.
Fig.18 is a cross-sectional view of a characteristic part of the antenna device.
Fig.19 is a perspective view of the characteristic part in Fig.18.
Fig.20 is a cross-sectional view of FIG.19 sectioned along a line A-A.
Fig.21 is a perspective view illustrating a characteristic part of another exemplary embodiment of the present invention.
Fig.22 is a cross-sectional view illustrating the characteristic part in
Fig.21.

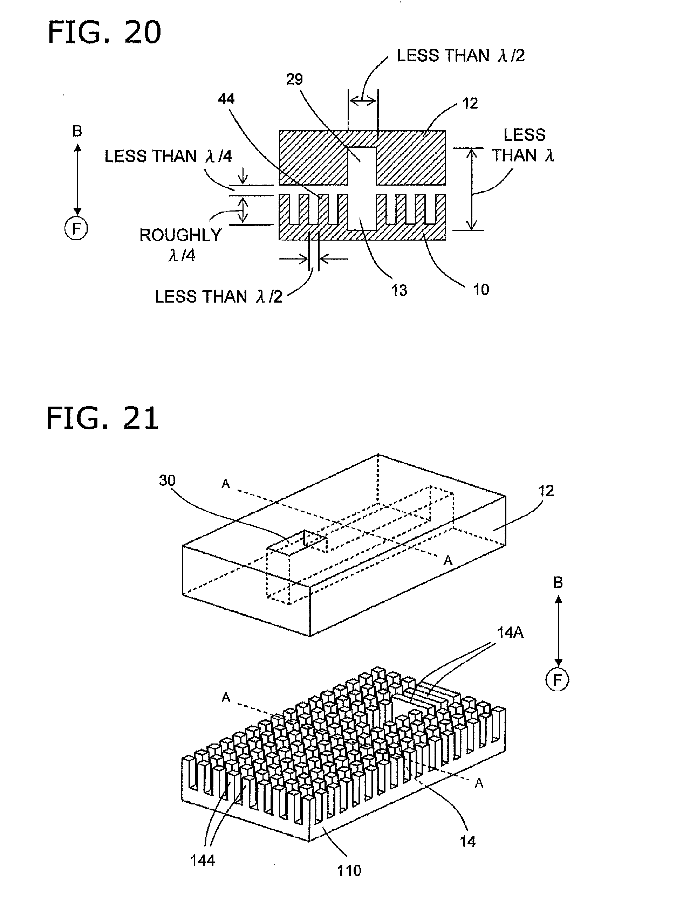

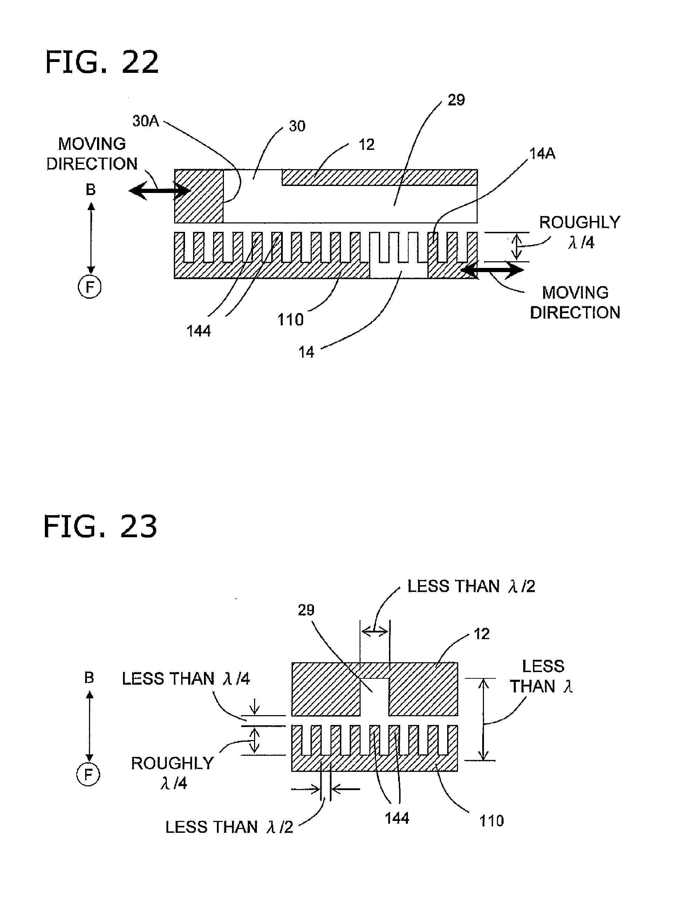

Fig.23 is a cross-sectional view of FIG.21 sectioned along a line A-A.

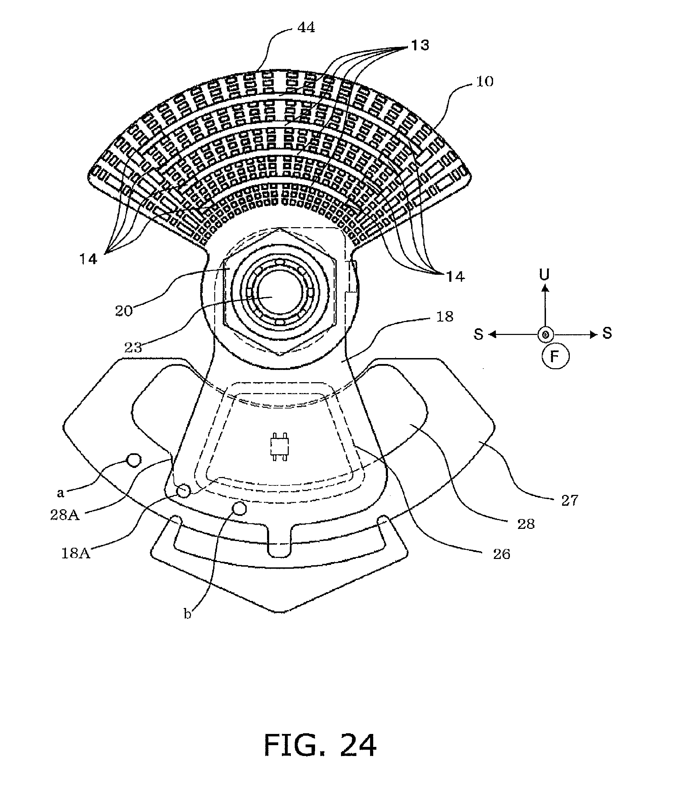

Fig.24 is a front view of a characteristic part of the antenna device according to the exemplary embodiment of the present invention.

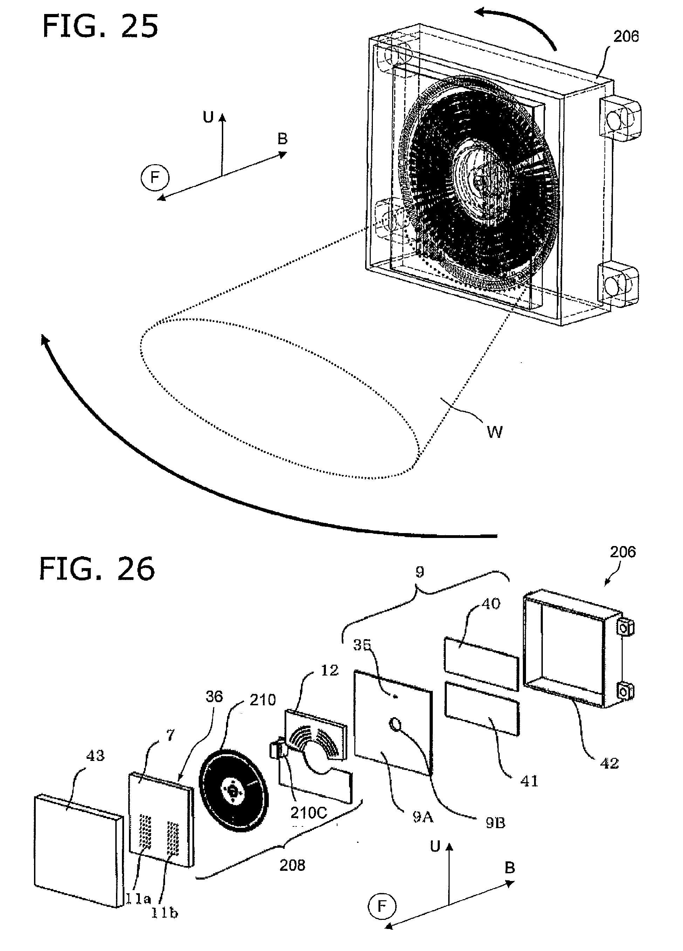

Fig.25 is a perspective view of an antenna device according to another exemplary embodiment of the present invention.
Fig.26 is an exploded perspective view of the antenna device in Fig.25.

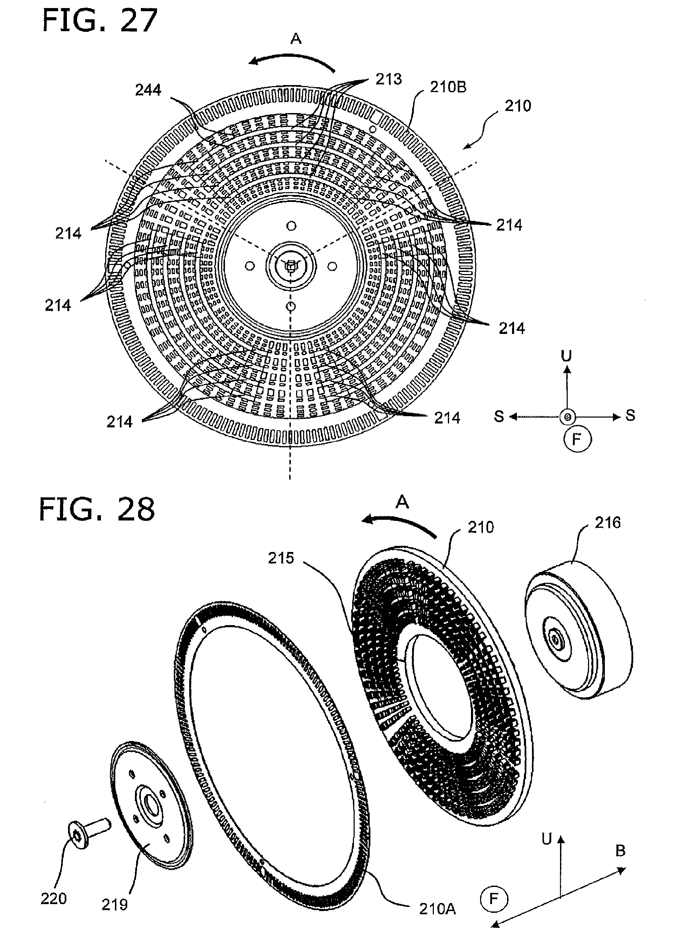

Fig.27 is a front view of a movable waveguide component of the antenna device in Fig.25.
Fig.28 is an exploded perspective view of a movable waveguide section of the antenna device in Fig.25.

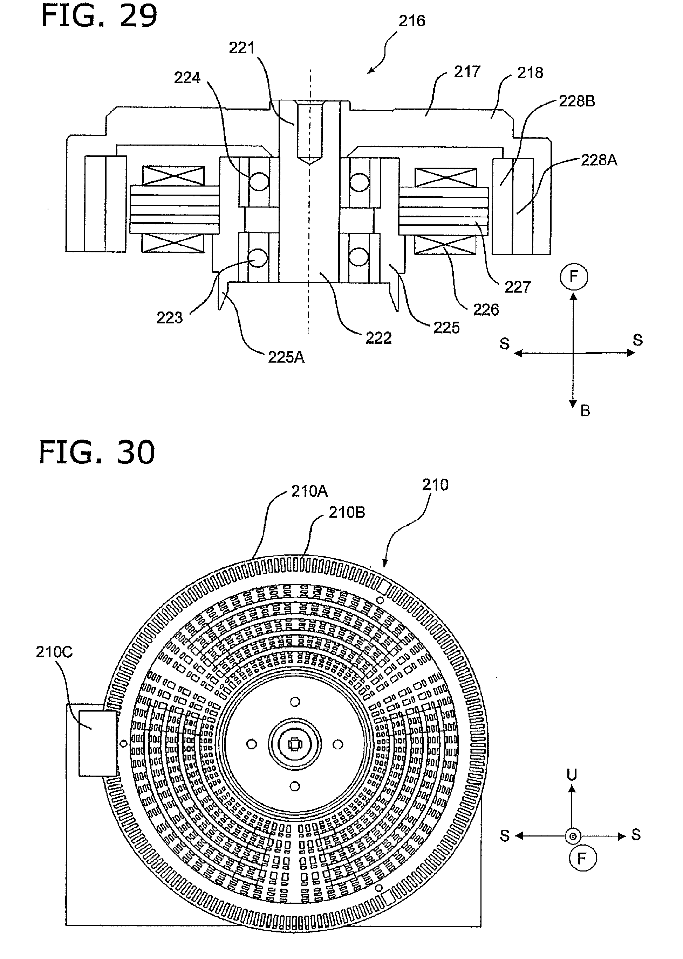

Fig.29 is a cross-sectional view of a motor of the movable waveguide section in Fig.28.
Fig.30 is a front view of the movable waveguide section in Fig.28.

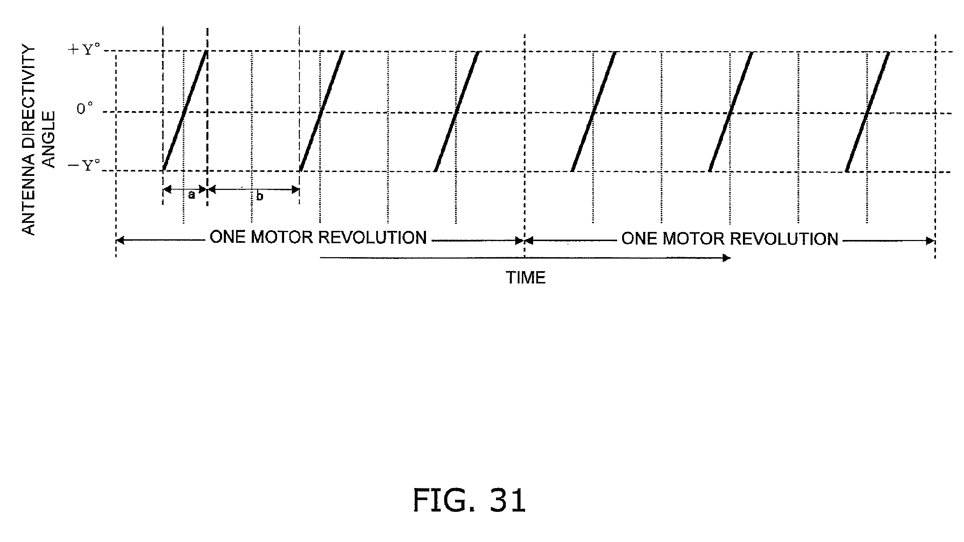

Fig.31 is a waveform chart in an operation of the antenna device in Fig.25.

### REFERENCE SIGNS LIST

- 1: Main vehicle body
- 2: Wheels
- 3: Hood
- 4: In-vehicle space
- 5: Bumper
- 6: Antenna device
- 7: Antenna
- 8: Waveguide structure (High frequency waveguide)
- 9: Transceiver
- 9A: Plate component
- 9B: Opening
- 10: Movable waveguide component (Second waveguide component)
- 11a: Transceiver port
- 11b: Transceiver port
- 12: Immovable waveguide component (First waveguide component)
- 13: Groove
- 14: Through hole
- 14A: Plate-shaped protrusion
- 15: Through hole
- 16: Cylindrical shaft
- 17: Small diameter portion
- 18: Driving component
- 18A: Magnet
- 19: Through hole
- 20: Nut
- 21: Bearing
- 22: Bearing
- 23: Support shaft
- 24: Plate component
- 25: Through hole
- 26: Electromagnetic coil
- 27: Yoke
- 28: Magnet
- 28A: Magnet attraction portion
- 29: Groove
- 30: Through hole
- 30A: First short-circuited surface
- 31: Groove
- 32: Power supply port
- 33: Plate component
- 33A: Plate component
- 34: Power supply port
- 35: Power supply port
- 36: Immovable waveguide component (First waveguide component)
- 37: Groove
- 38: Through hole
- 39: Groove
- 40: RF circuit unit
- 41: Control unit
- 42: Casing
- 43: Cover
- 44: Protrusion
- 45: Magnetic Sensor
- 46, 47, 48, 49: Magnetic resistance element
- 110: Movable waveguide component (Second waveguide component)
- 144: Protrusion
- 206: Antenna device
- 208: Waveguide structure (High frequency waveguide)
- 210: Movable waveguide component (Second waveguide component)
- 210A: Positional detector plate (Positional detector)
- 210B: Opening (Positional detector)
- 210C: Light transmitter/receiver element (Positional detector)
- 213: Groove
- 214: Through hole
- 215: Through hole
- 216: Motor
- 217: Hub
- 218: Protrusion
- 219: Clamper plate
- 220: Screw
- 221: Screw hole
- 222: Shaft
- 223: Bearing
- 225: Bush
- 225A: Fixation protrusion
- 226: Coil
- 227: Stator
- 228A: Yoke
- 228B: Magnet
- 244: Protrusion
- W: Radio waves

### DESCRIPTION OF EMBODIMENTS

An exemplary embodiment of the present invention will be hereinafter explained. In the exemplary embodiment, an automobile is used as an electronic apparatus that an antenna device 6, including a high frequency waveguide structure, is installed.

### (Exemplary Embodiment 1)

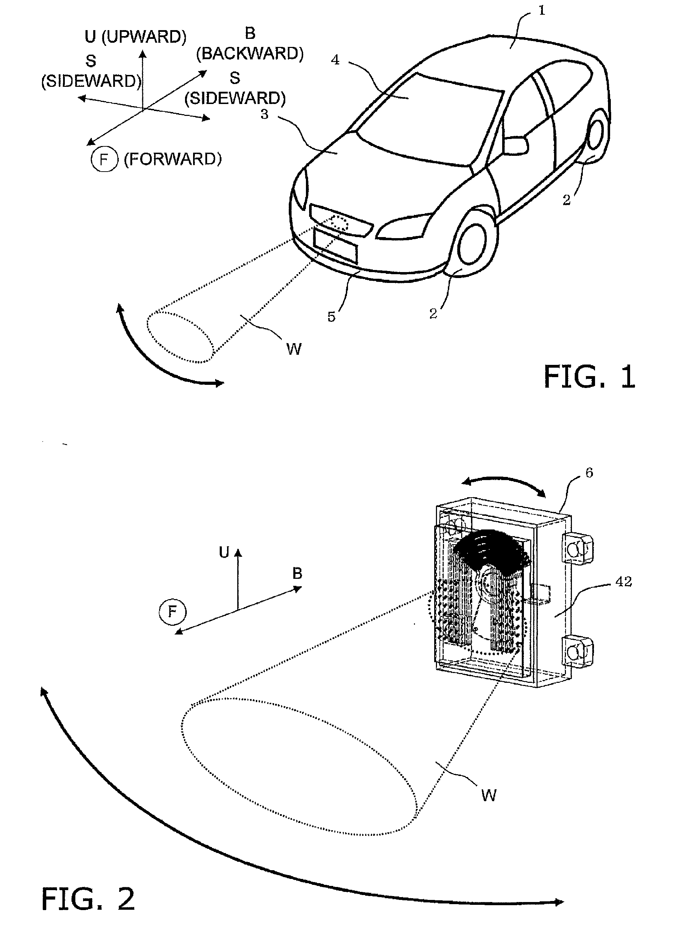

In Fig.1, a reference numeral 1 is assigned to a main vehicle body, whereas a reference numeral 2 is assigned to four wheels disposed in the lower part of the main vehicle body 1.

The wheels 2 are configured to be driven/rotated by an engine (not illustrated in the figure) housed below a hood 3 of the main vehicle body 1.

Further, the main vehicle body 1 includes a handle (not illustrated in the figure) in an in-vehicle space 4 thereof. The handle allows a driver of the automobile to operate the wheels 2. Yet further, the main vehicle body 1 includes an antenna device 6 (see FIG.2) above a bumper 5 disposed on the front side thereof.

Although explained later in detail, as illustrated in Figs.1 and 2, the antenna device 6, disposed on the front side of the main vehicle body 1, is configured to emit radio waves W of 76.5 GHz forwards (e.g., in a distance range of 150 m ahead) at a predetermined horizontal angular range while sequentially scanning the horizontal angular range. The horizontal angular range herein includes predetermined right and left angles with respect to the forward direction. For example, the horizontal angular range includes a right angle of 15 degrees and a left angle of 15 degrees (totally 30 degrees). Subsequently, the antenna device 6 is configured to receive reflected waves within the distance range of 150 m ahead at the emission angular range. The antenna device 6 is thereby configured to detect an object existing within the distance range of 150 m ahead (e.g., another automobile travelling ahead or an obstruction such as a fallen object). A result of the detection can be used for various controls of the main vehicle body 1.

For example, the controls include: a control of maintaining a predetermined inter-vehicle distance between the automobile and another automobile travelling ahead through a speed control of the automobile based on measurement of a distance between the automobile and another automobile travelling ahead; and a control of alarming within the in-vehicle space 4 based on a detection of a fallen object existing ahead.

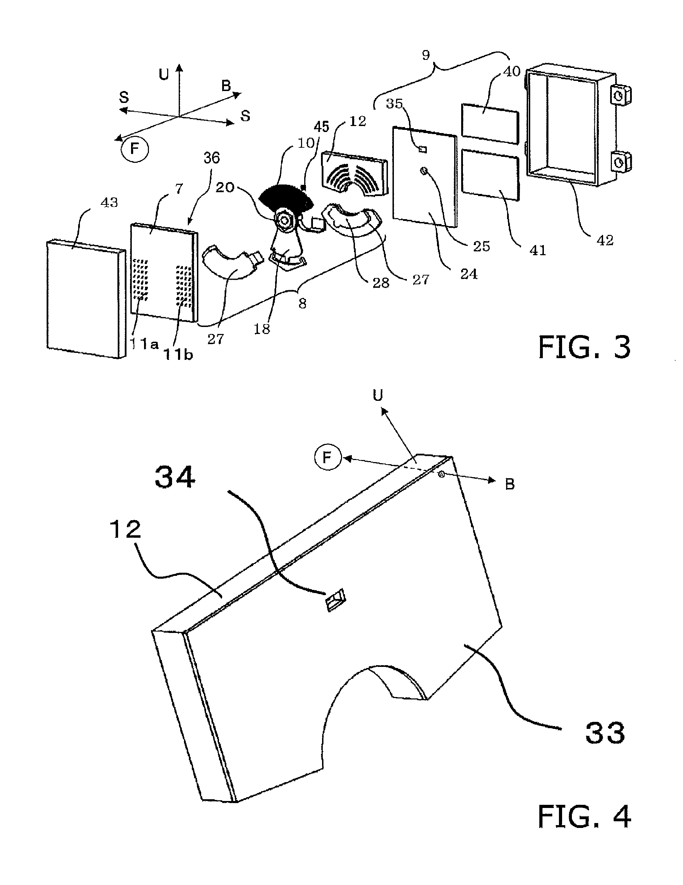

The antenna device 6, illustrated in Fig.2, is specifically formed by a variety of elements illustrated in Fig.3. It should be noted that directional signs F, B, U, and S in Fig.3 respectively correspond to directional signs F (forward), B (backward), U (upward), and S (sideward) depicted in Fig.1. The relation is also applied to directional signs depicted in Fig.4 and subsequent figures.

Specifically, as illustrated in Fig.3, a transceiver 9 is disposed behind an antenna 7 through a waveguide structure 8 (high frequency waveguide).

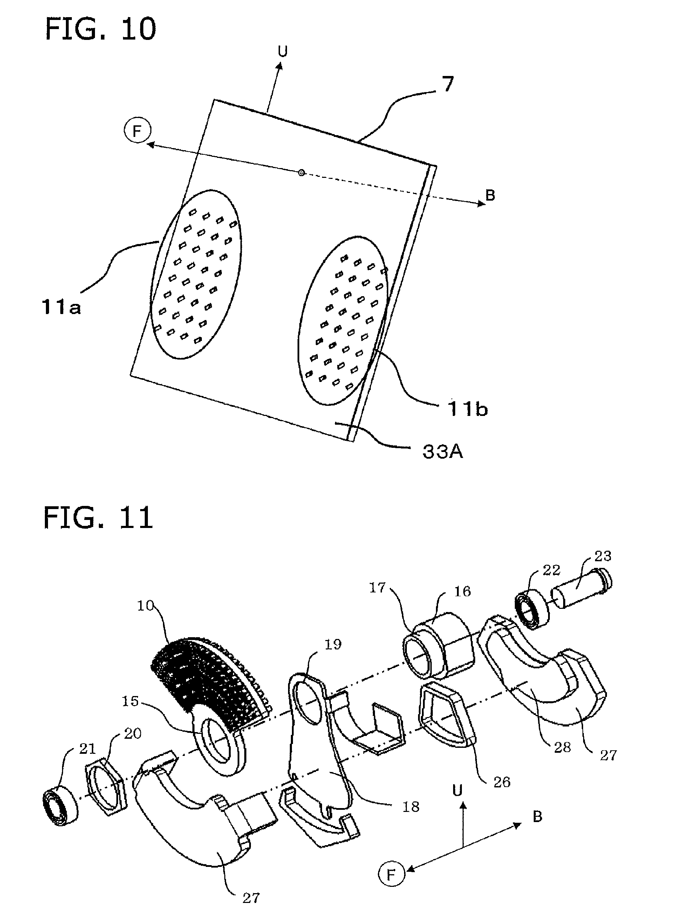

First, the antenna 7 is formed in a flat plate shape as illustrated in Fig.3. The antenna 7 includes a plurality of transceiver ports 11a, 11b on the right and left parts thereof. The structure of the antenna 7 is also illustrated in Fig.10. Shapes of the transceiver ports 11a, 11b will be specifically explained later in detail.

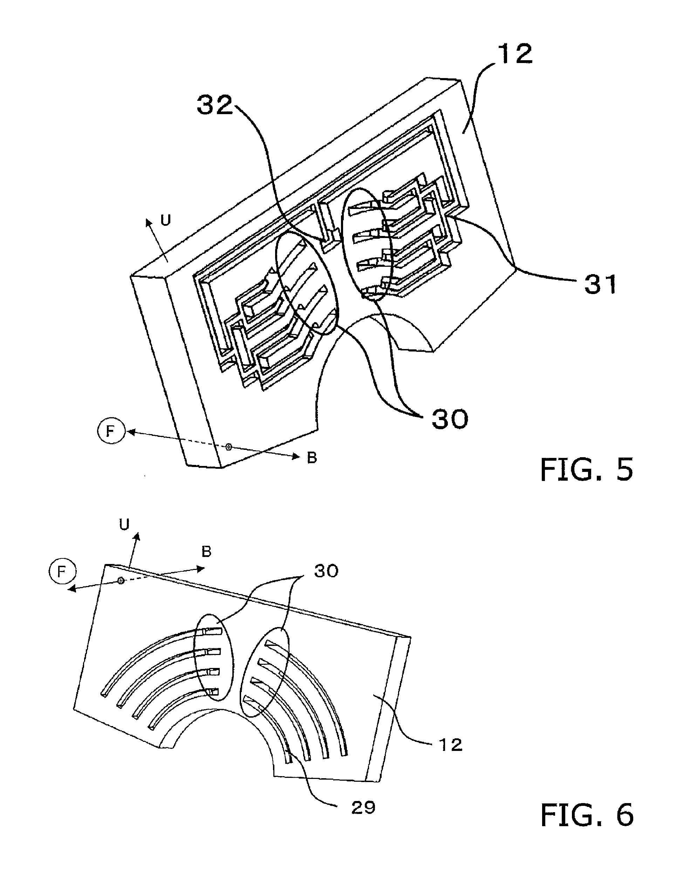

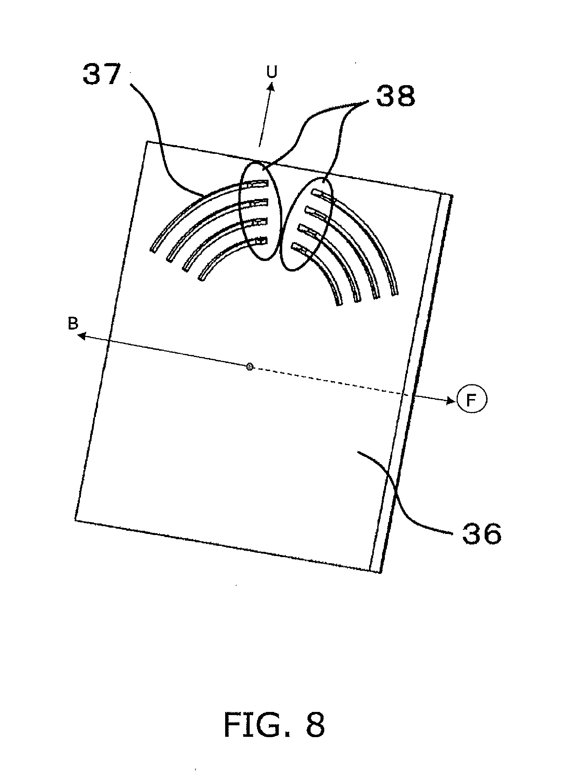

Explanation of the antenna device 6 will be continued with reference back to Fig.3. Next, the waveguide structure 8 includes a fan-shaped movable waveguide component 10 (a second waveguide component; a fan-shaped member), a immovable waveguide component 36 (a first waveguide component) 36 (see FIG.8), and an immovable waveguide component 12 (a first waveguide component) 12 (see Figs.5 and 6). The immovable waveguide component 36 is herein disposed in front of the movable waveguide component 10, whereas the immovable waveguide component 12 is disposed behind the movable waveguide component 10.

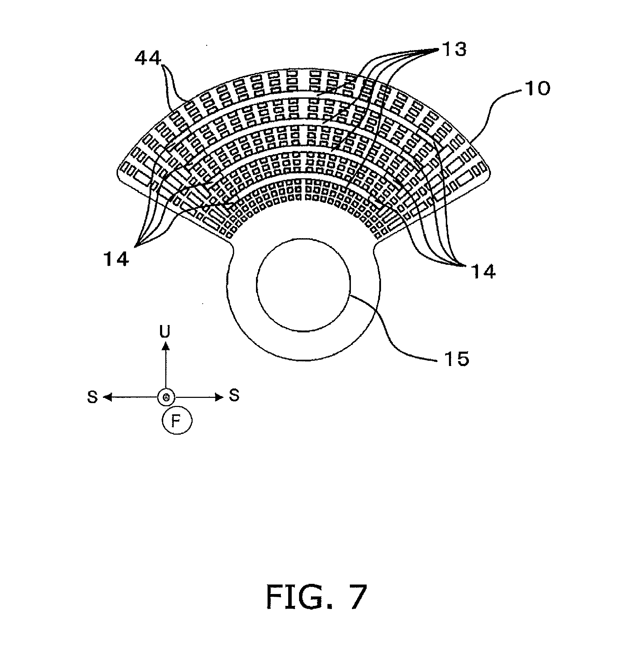

Firstly, amongst the elements, the movable waveguide component 10 is formed by, for instance, a metal/resin magnetic component having a metal film plated on the surface thereof. As illustrated in Figs.7 and 11, the movable waveguide component 10 further includes four grooves 13 on each of the front and back surfaces thereof. The grooves 13 are aligned at predetermined intervals from the radial inner side to the radial outer side of the fan-shaped part (i.e., the circular sector part) of the movable wave guide component 10. As illustrated in Fig.7, the movable waveguide component 10 further includes through holes 14 penetrating the front and back surfaces thereof. Each groove 13 herein includes two through holes 14 in the transverse ends thereof.

Explanation of the movable waveguide component 10 will be hereinafter further continued. As described above, the movable waveguide component 10 is formed in a fan shape. The movable waveguide component 10 includes a through hole 15 in a so-called rivet portion (i.e., a base portion) thereof. The through hole 15 allows a shaft element to penetrate therethrough for allowing the movable waveguide component 10 to be supported about the shaft element. Specifically, a small diameter portion 17 is inserted into the through hole 15. The small diameter portion 17 is formed on the front side of a cylindrical shaft 16. Prior to the insertion, the small diameter portion 17 is inserted into a through hole 19 formed in a driving component 18 illustrated in Fig.11. The small diameter portion 17 is then inserted into the through hole 15 of the movable waveguide component 10. Under the condition, a nut 20 is screwed onto the distal end of the small diameter portion 17, which is forwardly protruded out of the through hole 15.

It should be noted that Fig.11 does not illustrate the threaded grooves of the small diameter portion 17 and the nut 20.

Further, a bearing 21 is disposed in the front inner part of the cylindrical shaft 16, whereas a bearing 22 is disposed in the rear inner part of the cylindrical shaft 16. A support shaft 23 is fixed to the through holes of the bearings 21, 22 while penetrating therethrough. In other words, the movable waveguide component 10 and the driving component 18 are configured to rotate about the support shaft 23.

As illustrated above, the movable waveguide component 10 and the driving component 18 are configured to rotate about the support shaft 23 while being integrally attached. The center of mass of the integrated movable parts is herein set to be in the support axle part of the support shaft 23. Therefore, the movable parts can keep a good weight balance. Consequently, it is possible to inhibit driving energy for pivoting the movable parts. This results in an advantageous effect of inhibiting power consumption.

Further, the well-balanced state of the movable parts can inhibit impact of disturbances (e.g., vibration and shock) on the antenna device 6. When installed in an automobile, the antenna device 6 receives less impact of vibration and shock. Therefore, the antenna device 6 has an advantageous effect of enhancement in reliability.

It should be noted that the support shaft 23 is fixed to a through hole 25 of a plate component 24 disposed as a front component of the transceiver 9 disposed behind the waveguide structure 8 as illustrated in Fig.3.

Explanation of the movable waveguide component 10 will be continued with reference back to Fig.11. The fan-shaped movable waveguide component 10 and the driving component 18 are integrated at the respective rivet portions (i.e., the base portions). Under the condition, an electromagnetic coil 26 is attached to the back surface of the driving component 18. Further under the condition, a yoke 27 is disposed in front of the driving component 18, whereas a magnet 28 is disposed behind the driving component 18. The yoke 27 and the magnet 28 herein form a magnetic circuit.

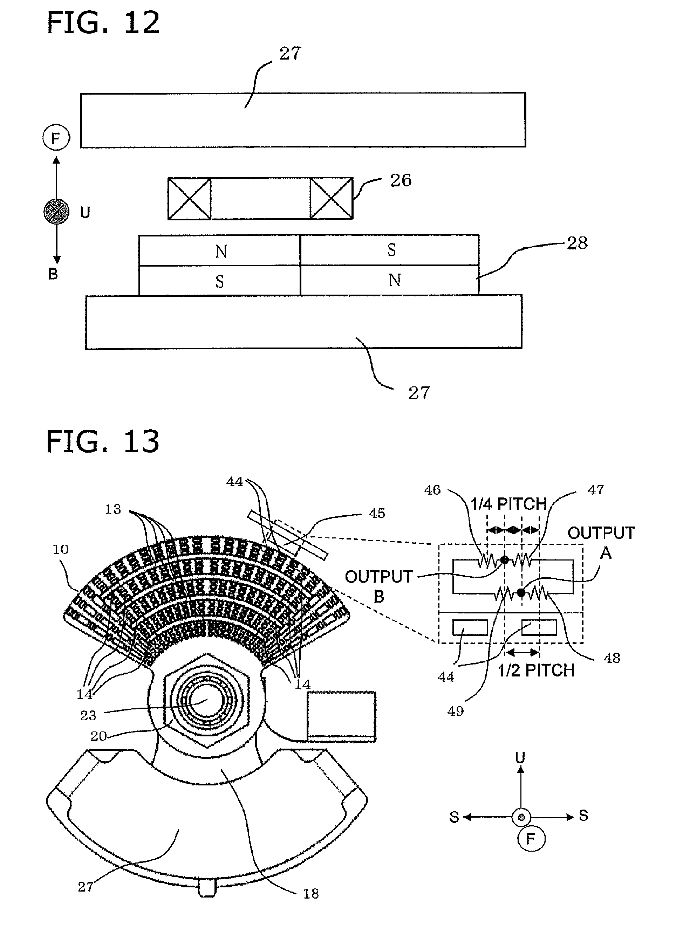

Fig.12 illustrates a magnetic circuit section.

As illustrated in the magnetic circuit of Fig.12, the electromagnetic coil 26 is disposed between the front-side yoke 27 and the back-side magnet 28 in a noncontact state. When the electromagnetic coil 26 is electrified under the state, the driving component 18 receives electromagnetic force under the Fleming's left hand rule. Frontally seen in Fig.11, the driving component 18 is configured to pivot right and left.

As described above, pivot of the driving component 18 is transferred to the movable waveguide component 10 integrated with the driving component 18. Accordingly, the movable waveguide component 10 is also configured to pivot right and left.

As described above, the immovable waveguide component 12 is disposed behind the movable waveguide component 10 thus configured to pivot right and left, while being opposed to the movable waveguide component 10 at a predetermined interval in a noncontact state.

As illustrated in Fig.6, the immovable waveguide component 12 includes two groove sets on the front side thereof. The groove sets are transversely separated, and each groove set includes four grooves 29 respectively formed in a circular-arc shape. The grooves 29 are entirely arranged in a circular-sector shape while being sequentially aligned at predetermined intervals towards radial outward of the circular sector shape.

Each groove 29 includes a through hole 30 formed closer to the center part transversely separating the groove sets.

As illustrated in Fig.5, on the other hand, the immovable waveguide component 12 includes grooves 31 on the back surface thereof. The grooves 31 are entirely formed in a so-called tournament (or series) power supply shape. The grooves 31 of a right/left set continue to four through holes 30, respectively. The grooves 31 form a waveguide while being covered with a plate component 33 illustrated in Fig.4. As illustrated in Fig.5, the grooves 31, entirely formed in the tournament power supply shape, are finally integrated into a single power supply port 32. As illustrated in Fig.4, the back surface of the immovable waveguide component 12 is covered with the plate component 33 under the condition. Further, the plate component 33 includes a power supply port 34. The position of the power supply port 34 is matched with the position of the power supply port 32 of the immovable waveguide component 12.

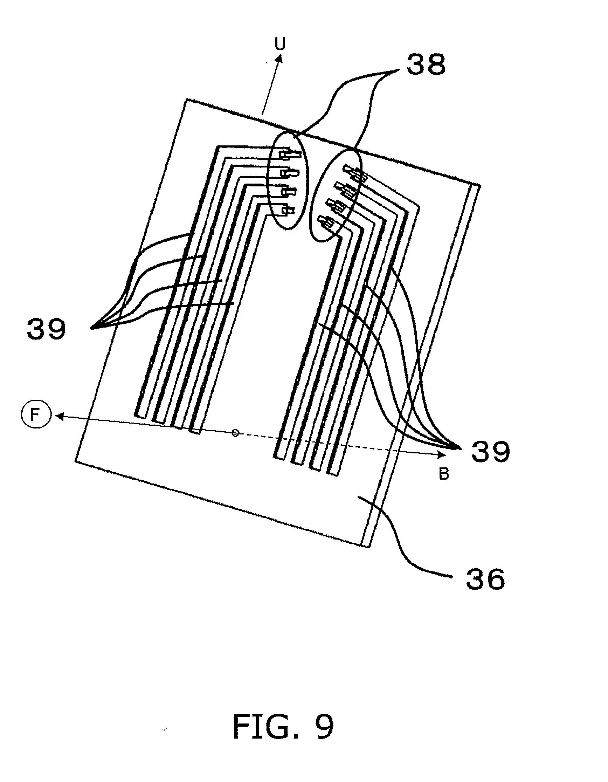

A power supply port 35 of the plate component 24 is opposed to the power supply port 34. On the other hand, the immovable waveguide component 36 is integrated with the back surface of the antenna 7 disposed in front of the movable waveguide component 10, as illustrated in Figs.8 and 9.

As illustrated in Fig.8, the immovable waveguide component 36 includes two groove sets on the back surface thereof. The groove sets are transversely separated, and each groove set includes four grooves 37 respectively formed in a circular-arc shape. The grooves 37 are entirely arranged in a circular sector shape while being aligned in a radial outward direction of the circular-sector shape. Each groove 37 includes a through hole 38 formed closer to the center part transversely separating the groove sets.

As illustrated in Fig.9, the immovable waveguide component 36 includes two groove sets on the front surface thereof. The groove sets are transversely separated, and each groove set includes four grooves 39 respectively extended in a vertical direction. As illustrated in Fig,10, the grooves 39 from a waveguide while being covered with a plate component 33A. As illustrated in Fig.9, the upper end portions of the grooves 39 are respectively slanted inwards. Further, the slanted portion of each groove 39 includes the through hole 38 in the distal end thereof.

Explanation of the antenna device 6 will be continued with reference back to Fig.3. The transceiver 9, disposed behind the waveguide structure 8, includes the aforementioned plate component 24, a radio frequency (RF) circuit unit 40, and a control unit 41. The RF circuit unit 40 and the control unit 41 are both disposed behind the plate component 24. Further, the transceiver 9 is electrically connected to a transceiver device (not illustrated in the figure).

It should be noted that a casing 42, disposed in the rearmost position in Fig.3, sequentially houses the transceiver 9, the waveguide structure 8, and the antenna 7 in the interior thereof. Under the condition, a cover 43 is attached to the front side of the casing 42 (specifically, the front side of the antenna 7). The cover 43 herein has a radio wave transmissive property.

### <Actual Controls>

In the automobile illustrated in Fig.1, a central controller (not illustrated in the figure) of the main vehicle body 1 is configured to measure a distance between the automobile and another automobile traveling ahead, for instance. A case will be hereinafter explained that the central controller commands the antenna device 6 to forwardly emit the radio waves W of 76.5 GHz, for instance, at an angular range including right and left angles respectively having 15 degrees (totally 30 degrees) as illustrated in Fig.1, and receive reflected waves for controlling the speed of the automobile or exploring an obstruction ahead.

First, the control unit 41 illustrated in Fig.3 herein receives the aforementioned instruction and causes the RF circuit unit 40 to emit the radio waves W of 76.5 GHz.

The radio waves W penetrate through the power supply port 35 of the plate component 24 and subsequently propagate into the power supply port 34 (see Fig.4) formed on the back surface of the plate component 33.

The radio waves W are subsequently supplied from the power supply port 34 to the power supply port 32 of the immovable waveguide component 12 illustrated in Fig.5. The radio waves W further propagate into the divided eight grooves 31 while being divided throughout the so-called tournament power supply path illustrated in Fig.5. The radio waves W are then supplied from the through holes 30 to the transversely divided eight grooves 29 formed on the front surface of the immovable waveguide component 12.

The grooves 13 of the movable waveguide component 10, illustrated in Figs.7 and 11, are opposed to the grooves 29 at a predetermined interval.

Therefore, a waveguide of the emitted radio waves W of 76.5 GHz is formed on the back side of the movable waveguide component 10 by the opposed grooves, that is, the grooves 13 and the grooves 29 of the immovable waveguide component 12. The radio waves W propagate through the waveguide and subsequently get to the front surface of the movable waveguide component 10 through the through holes 14.

It should be noted that the movable waveguide component 10 is configured to reciprocally pivot right and left in conjunction with electrification of the electromagnetic coil 26 as described above. The waveguide length accordingly changes. The phase of the radio waves W thereby periodically changes in conjunction with pivot of the movable waveguide component 10 when the radio waves W get to the front surface of the movable waveguide component 10 through the through holes 14.

Under the condition that the phase of the radio waves W periodically changes, the radio waves W subsequently propagate into the grooves 37 (see Fig.8) of the immovable waveguide component 36 opposed to the front surface of the movable waveguide component 10 at a predetermined interval.

In other words, the circular-arc shaped grooves 13 and the transversely divided circular-arc shaped grooves 37 of the immovable waveguide component 36 illustrated in Fig.8 are correspondingly opposed to each other on the front side of the movable waveguide component 10. The radio waves W thereby propagate through the waveguide formed by the grooves 13, 37.

It should be herein noted that the front surface of the movable waveguide component 10 is herein configured to reciprocally pivot right and left in conjunction with electrification of the electromagnetic coil 26, similarly to the back surface of the movable waveguide component 10 as described above. The waveguide length accordingly changes on the front surface of the movable waveguide component 10 as well. The phase of the radio waves W thereby periodically changes in conjunction with pivot of the movable waveguide component 10 when the radio waves W propagate through the waveguide.

The radio waves W subsequently get to the front surface of the immovable waveguide component 36 through the through holes 38 illustrated in Fig.8. Further, the radio waves W propagate through the transversely separated grooves 39 respectively extended from top to bottom on the front surface of the immovable waveguide component 36.

As illustrated in Fig.10, the transceiver ports 11a, 11b of the antenna 7 are positioned in front of the aforementioned transversely separated grooves 39 respectively extended in the vertical direction. The radio waves W are thereby configured to be emitted ahead of the main vehicle body 1 illustrated in Fig.10 through the transceiver ports 11a, 11b.

Under the condition, a set of plural transceiver ports 11a and a set of plural transceiver ports 11b are transversely separated at a predetermined interval as illustrated in Fig.10. In each of the transversely separated sets, the transceiver ports 11a/11b are aligned in four columns at predetermined intervals. Further in each column, the transceiver ports 11a/11b are vertically separated at predetermined intervals. Thus, totally eight columns of the transceiver ports 11a, 11b are aligned as illustrated in Fig.10.

As described above, it is herein important that the phase of the radio waves W supplied to the transceiver ports 11a, 11b is configured to periodically change in conjunction with pivot of the movable waveguide component 10. This is similar to the following exemplary case. Eight speaker units are separated at predetermined intervals and the phase of sounds to be outputted therefrom periodically changes in a sequential manner. A group of listeners is herein seated in front of the speaker units while being away therefrom. Further, the listeners are entirely aligned in eight columns, each of which includes plural listeners. The eight columns are transversely aligned while being opposed to the speaker units, respectively. Under the condition, a transverse position where listeners feel a strong sound is sequentially moved from center to right, then moved back to center again, further moved from center to left, and then moved back to center again. Thus, the phase of the radio waves W periodically changes similarly to the aforementioned transverse position where listeners feel a strong sound.

In other words, even when the antenna 7 is configured to be immovable, the radio waves W can be continuously forwardly emitted from the transceiver ports 11a, 11b formed on the left and right parts of the antenna 7 at the angular range including the right and left angles respectively having 15 degrees (totally 30 degrees) as described above. The radio waves W are herein emitted while a high-intensity wave portion thereof is configured to sequentially pivot within the angular range including the right and left angles respectively having 15 degrees (totally 30 degrees). When returning from a position ahead in the direction that the high-intensity wave portion is emitted, reflected waves are allowed to reversely propagate through the aforementioned path of the emitted radio waves W and get to the RF circuit unit 40.

The control unit 41 herein has information of an emission direction/angle of the radio waves W. Based on the information, the control unit 41 instantly determines whether or not an automobile travels ahead or an obstruction exists at the angle. The control unit 41 then transmits a result of the determination to the central controller installed in the main vehicle body 1 as described above.

It should be noted that direct detection of the pivot angle of the movable waveguide component 10 is preferable for enhancing accuracy in detection of the emission angle. In response, the present exemplary embodiment desirably adopts a structure and a configuration illustrated in Fig.13.

First, the immovable waveguide component 36 is specifically disposed in front of the movable waveguide component 10 at a predetermined interval in a noncontact state, whereas the immovable waveguide component 12 is disposed behind the movable waveguide component 10 at a predetermined interval in a noncontact state, as described above. Next, grooves formed on the components (i.e., a pair of the grooves 28 and the grooves 13, and a pair of the grooves 13 and the grooves 37, from back to front) are opposed to each other. The structure forms paths allowing the radio waves W to propagate therethrough.

The movable waveguide component 10 is herein configured to move. Therefore, it is required to produce a predetermined interval between the movable waveguide component 10 and the immovable waveguide components 36 and between the movable waveguide component 10 and the immovable waveguide component 12.

However, leakage of the radio waves may be caused when a predetermined interval is thus produced between the movable waveguide component 10 and the immovable waveguide component 36 and between the movable waveguide component 10 and the immovable waveguide component 12.

In view of the drawback, the present exemplary embodiment has a structure that a plurality of protrusions 44 are disposed on the fan-shaped movable waveguide component 10 while being arranged on the radial inner side of the respective grooves 13 (i.e., below the respective grooves 13 in Fig.7) and the radial outer side of the respective grooves 13 (i.e., above the grooves 13 in Fig.7), as described in Figs.7 and 11.

A further detailed explanation of the protrusions 44 will be continued. The protrusions 44 are protruded from the movable waveguide component 10 towards both the immovable waveguide component 36 disposed in front of the movable waveguide component 10 and the immovable waveguide component 12 disposed behind the movable waveguide component 10. The height of each protrusion 44 is set to be λ/4, which is equal to one-forth of a wavelength λ of the radio waves W propagating through the grooves 13.

Further, an interval between any adjacent two protrusions 44 is set to be less than λ/2, which is half of the wavelength λ of the radio waves W propagating through the grooves 13.

Even when the radio waves W have chances to leak to the radial inner side and the radial outer side of the grooves 13 while propagating through the grooves 13, the protrusions 44 produce an open state for the radio waves W (i.e., a state that no leakage path is left for the radio waves W). As a result, occurrence of leakage of the radio waves W to the radial inner and outer sides can be prevented.

The radio waves W consequently propagate within the waveguide formed by the grooves 13, 37. The radio waves W are then emitted ahead of the main vehicle body 1 through the transceiver ports 11a, 11b while being pivoted right and left at a predetermined angular range.

In the present exemplary embodiment, a magnetic sensor 45 is disposed closer to the protrusions 44 disposed on the radial outermost part of the movable waveguide component 10 for enhancing accuracy of the emission direction, as illustrated in Fig.13.

The magnetic sensor 45 includes four magnetic resistance elements 46, 47, 48, 49 and a bias magnet (not illustrated in the figure). As illustrated in Fig.13, the four magnetic resistance elements 46, 47, 48, 49 are bridge-connected. Further, 1/2 pitch, i.e., half of a pitch (interval) between any adjacent two protrusions 44, is set as a distance between the center of the magnetic resistance element 46 and the center of the magnetic resistance element 47 and a distance between the center of the magnetic resistance element 48 and the center of the magnetic resistance element 49.

Further, 1/4 pitch, i.e., one-fourth of the pitch (interval) between any adjacent two protrusions 44, is set as a distance between the center of the magnetic resistance element 46 and the center of the magnetic resistance element 49 and a distance between the center of the magnetic resistance element 47 and the center of the magnetic resistance element 48.

Under the condition, the magnetic sensor 45 is disposed in any suitable positions excluding the center of the movable waveguide component 10 (e.g., an upper right position) in a front view as illustrated in Fig.13.

As described above, the radio waves W are required to pivot at the angular range including the right and left angles respectively having 15 degrees (totally 30 degrees) when being emitted from the main vehicle body 1. Therefore, the magnetic sensor 45 is configured not to exceed imaginary lines extended from the protrusions 44 aligned in the transversely outermost columns even when the movable waveguide component 10 illustrated in Fig.13 is pivoted.

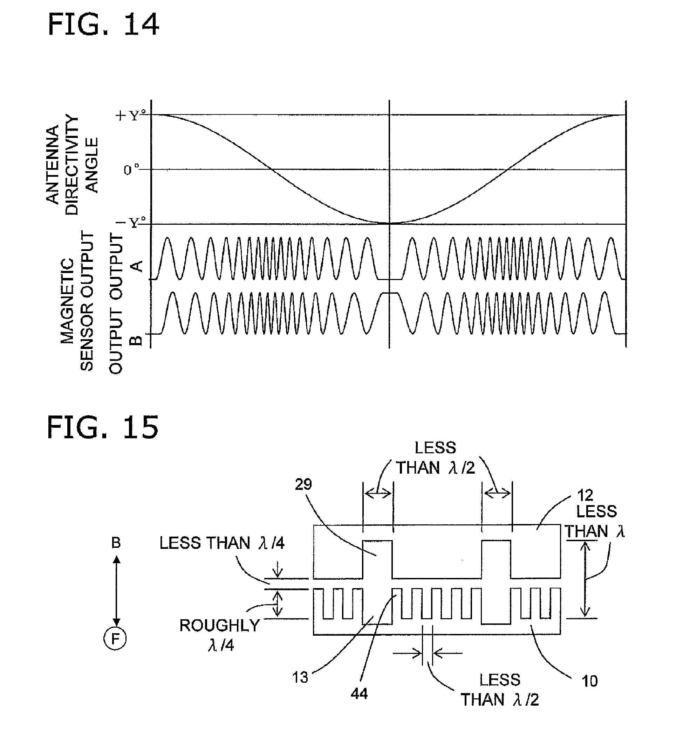

For example, when the movable waveguide component 10 is pivoted in the counterclockwise direction in Fig.13 (i.e., a left part of the chart in Fig.14) under the condition, an output is obtained in an output point A between the magnetic resistance element 48 and the magnetic resistance element 49 earlier than in an output point B between the magnetic resistance element 46 and the magnetic resistance element 47, as illustrated in Fig.14.

Based on this, the control unit 41 determines that the movable waveguide component 10 is pivoted in the counterclockwise direction. The control unit 41 counts frequency of outputs in the output point A thereafter. The control unit 41 recognizes frequency of the counterclockwise pivots of the movable waveguide component 10 based on the frequency.

On the other hand, when an output is obtained in the output point B earlier than in the output point A (a right part of the chart in Fig.14), the control unit 41 obviously recognizes a clockwise pivot of the movable waveguide component 10 and a pivot angle of the movable waveguide component 10.

An output from the magnetic sensor 45 is supplied to the central controller of the main vehicle body 1 through the control unit 1. Based on the output, the central controller executes controls for enhancing safety during driving of the automobile by decelerating the automobile for keeping a predetermined inter-vehicle distance between the automobile and another automobile traveling ahead and by decelerating the automobile in response to detection of an obstruction existing ahead.

It should be noted that the magnetic sensor 45 is used as a positional detector unit in the aforementioned exemplary embodiment. However, a photo-detector may be used as the positional detector unit. In this case, the photo-detector is configured to emit light, and the emitted light is reflected by the protrusions 44. Therefore, the pivot angle can be detected by detecting the periodicity of the signal of the reflected light.

To detect an obstruction and the like existing in the pivot direction, a plurality of photo-detectors may be herein required or another element configured to detect the pivot direction may be herein required in addition to the aforementioned photo-detector.

### <Main Features>

Main features of the present exemplary embodiment will be hereinafter explained.

As described above, the movable waveguide component 10 is configured to relatively move with respect to the immovable waveguide components 12, 36 for changing the waveguide length. Accordingly, clearances are produced between the movable waveguide component 10 and the immovable waveguide component 12 and between the movable waveguide component 10 and the immovable waveguide component 36. The main feature of the present exemplary embodiment is to prevent radio waves from leaking through the clearances in the aforementioned condition.

In the present exemplary embodiment, the movable waveguide component 10 includes the plural protrusions 44, respectively having a predetermined size and a predetermined pitch, on the both surfaces thereof opposed to the immovable waveguide components 12, 36.

Fig.15 explains the relation between the movable waveguide component 10 and the immovable waveguide component 12. However, the relation can be also applied to the relation between the movable waveguide component 10 and the immovable waveguide component 36.

As illustrated in Fig.15, a predetermined interval (which is less than λ/4, where λ is a wavelength of the radio waves W of 76.5 GHz to be used) is produced between the movable waveguide component 10 and the immovable waveguide component 12 for allowing the movable waveguide component 10 to move. Further, the plural protrusions 44 are disposed in the surrounding of the openings of the grooves 13. Each protrusion 44 has a height of roughly λ/4. Further, an interval between any adjacent two protrusions 44 is set to be less than λ/2. Further, the size of the opening of each groove 13 , 29 is set to be less than λ/2 (although the size of the bottom surface of each groove 29 is less than λ/2 in Fig.15, the sizes of the bottom surface and the opening of each groove 13 , 29 are also set to be less than λ/2). Yet further, an interval between the bottom surface of each groove 13 and the bottom surface of each groove 29 is set to be less than λ.

The reasons for the aforementioned size-related settings are as follows. First, the sizes of the bottom surface and the opening of each groove 13 , 29 are set to be less than λ/2 and the interval between the bottom surface of each groove 13 and the bottom surface of each groove 29 is set to be less than λ for stably propagating the radio waves W to be used.

Next, the height of each protrusion 44 is set to be roughly λ/4 for producing a condition that an electric field is allowed to be generated in clearances among the protrusions 44 along a direction parallel to a plane formed by the protruded ends of the protrusions 44 (hereinafter referred to as a top plane of the protrusions 44) but an electric field is prevented from being generated in the clearances among the protrusions 44 along a direction perpendicular to the top plane of the protrusions 44. Especially, the radio waves W can be prevented from leaking out of the openings of the grooves 13, 29 by producing a condition (i.e., a magnetic wall state) that an electric field is prevented from being generated along a direction perpendicular to the top plane of the protrusions 44.

Further, the distance between any adjacent protrusions 44 is set to be less than λ/2 for stabilizing the magnetic wall state.

Yet further, the interval between the movable waveguide component 10 and the immovable waveguide component 12 is set to be less than λ/4 for stabilizing an effect of preventing leakage of the radio waves W.

Although herein explained again, Fig.15 explains the relation between the movable waveguide component 10 and the immovable waveguide component 12. However, the relation illustrated in Fig.15 can be also applied to the relation between the movable waveguide component 10 and the immovable waveguide component 36.

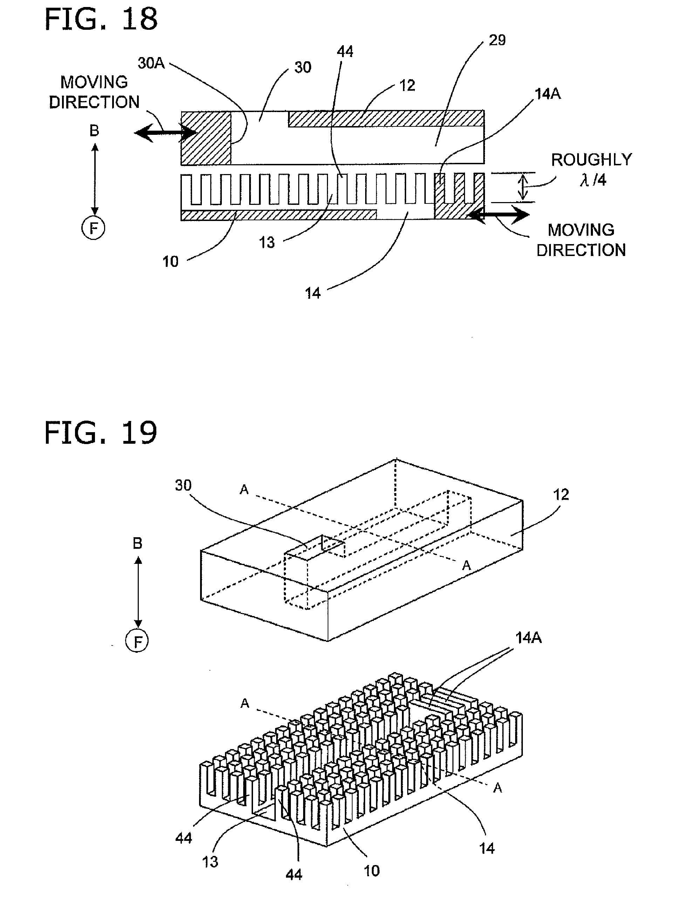

Further in the present exemplary embodiment, as illustrated in Figs.18 and 19, the immovable waveguide component 12 includes the through holes 30 on the surface thereof disposed on the opposite side to the movable waveguide component 10 as first input/output ports continued to the grooves 29. Yet further, the movable waveguide component 10 includes the though holes 14 on the surface thereof disposed on the opposite side to the immovable waveguide component 12 as second input/output ports continued to the grooves 13.

Further, each of the through holes 30 as the first input/output ports includes a first short-circuited surface 30A. The first short-circuited surface 30A is arranged on the opposite side to a corresponding one of the through holes 14 as the second input/output ports in the longitudinal direction of the groove 29. Yet further, each of the through holes 14 as the second input-output ports includes a plurality of plate-shaped protrusions 14A as a second short-circuited surface. The protrusions 14A are arranged on the opposite side to a corresponding one of the through holes 30 as the first input-output ports in the longitudinal direction of the groove 13.

Similar to the other protrusions 44, each of the plate-shaped protrusions 14A is set to have a height of roughly λ/4 (where λ is a wavelength of the radio waves W to be used).

Each of the plate-shaped protrusions 14A is set to have a height of roughly λ/4 for forming the following condition. An electric field is allowed to be generated in clearances among the plate-shaped protrusions 14A along the longitudinal direction (a transverse direction in Fig.18) of each groove 29 in parallel to a plane formed by the protruded ends of the plate-shaped protrusions 14A (hereinafter referred to as a top plane of the plate-shaped protrusions 14A). On the other hand, an electric field is prevented from being generated in the clearances among the plate-shaped protrusions 14A along a direction perpendicular to the top plane of the plate-shaped protrusions 14A. Further, an electric field is prevented from being generated in the clearances among the plate-shaped protrusions 14A along a direction parallel to the top plane of the plate shaped protrusions 14A and a direction perpendicular to each groove 29. Especially, an electric field is prevented from being generated along the direction perpendicular to the top plane of the plate-shaped protrusions 14A, and an electric field is further prevented from being generated along the direction parallel to the top plane of the plate-shaped protrusions 14A and the direction perpendicular to each groove 29 (a magnetic wall state is herein produced along a direction of each groove 29, whereas an electric wall state is produced along a direction perpendicular to each groove 29).

The radio waves W can be thereby prevented from leaking out of the through holes 14 as the second input/output ports along the longitudinal directions of the grooves 13, 29 (i.e., the transverse direction in Fig.18).

On the other hand, the first short-circuited surface 30A is, as described above, formed for producing the following condition. An electric field is prevented from being generated in a direction perpendicular to the top plane of the protrusions 44 respectively having a height of roughly λ/4. Further, an electric field is prevented from being generated in a direction parallel to the top plane of the protrusions 44. In other words, the radio waves W can be prevented from leaking out of the through holes 30 as the first input/output ports in the longitudinal direction of the grooves 13, 29 (i.e., along the transverse direction in Fig.18) by producing the condition that an electric field is prevented from being generated in both perpendicular and parallel directions to the top plane of the protrusions 44.

Figs.18 and 19 explain the relation between the movable waveguide component 10 and the immovable waveguide component 12. However, the relation can be also applied to the relation between the movable waveguide component 10 and the immovable waveguide component 36.

As described above, Fig.20, a cross-sectional view sectioned along a line A-A in Fig.19, illustrates the following configurations and other positional relations: a predetermined interval (less than λ/4) is produced between the movable waveguide component 10 and the immovable waveguide component 12 for allowing the movable waveguide component 10 to move; and the plural protrusions 44, disposed in the surrounding of the opening of each groove 13, respectively have a height of roughly λ/4.

Although herein explained again, Figs.18 to 20 explain the relation between the movable waveguide component 10 and the immovable waveguide component 12. The relation illustrated in Figs.18 to 20 can be also applied to the relation between the movable waveguide component 10 and the immovable waveguide component 36. Further, the waveguide length is configured to change in the relation between the movable waveguide component 10 and the immovable waveguide component 36. In conjunction with this, the phase of the radio waves W is configured to change.

Next, other features of the present exemplary embodiment will be explained.

In the present exemplary embodiment, the driving component 18 is configured to reciprocate right and left in conjunction with electrification of the electromagnetic coil 26 while being integrated with the movable waveguide component 10. The radio waves W are thereby emitted ahead of the main vehicle body 1 at the angular range including the right and left angles respectively having 15 degrees (totally 30 degrees). Subsequently, the radio waves W, returning as reflected waves, are received. As a result, information of another automobile traveling ahead or an obstruction existing ahead (e.g., a fallen object) is obtained.

In this case, the information in the forward direction is vital to the main vehicle body 1. Therefore, at least the information in the forward direction is required to be obtained, for instance, even when the electromagnetic coil 26 is interrupted from being electrified due to some troubles. In other words, at least the information in the forward direction is preferably configured to be obtained in any situations because the information in the forward direction is the main information for the main vehicle body 1.

In view of the above, the present exemplary embodiment adopts the configuration illustrated in Fig.24 for executing an operation of reliably obtaining the information in the forward direction.

As illustrated in Figs.11 and 24, the magnetic circuit, configured to generate driving force for the electromagnetic coil 26, is herein formed by the yoke 27 and the magnet 28, as described above.

In the present exemplary embodiment, a magnet 18A is fixed to a lower left part of the driving component 18 as illustrated in Fig.24. Further, the magnet 28 includes a protrusion-like magnet attraction portion 28A protruded in an obliquely downward direction in the front view of Fig.24. The magnet attraction portion 28A is configured to be opposed to the magnet 18A when the movable waveguide component 10 and the driving component 18 are positioned along the vertical direction in the front view of Fig.24.

When the movable waveguide component 10 is pivoted about the support shaft 23 in the clockwise direction in the front view of Fig.24, the driving component 18 is also pivoted in the clockwise direction. In this case, the magnet 18A is moved to a position "a" illustrated on the left of the magnet 18A in Fig.24.

On the other hand, when the movable waveguide component 10 is pivoted about the support shaft 23 in the counterclockwise direction, the driving component 18 is also pivoted in the counterclockwise direction. In this case, the magnet 18A is moved to a position "b" illustrated on the right of the magnet 18A in Fig.24.

In conjunction with electrification of the electromagnetic coil 26, the movable waveguide component 10 is thus configured to pivot right and left. For example, when the electromagnetic coil 26 is interrupted from being electrified due to some troubles, the movable waveguide component 10 may stop pivoting in an intermediate position between fully pivoted positions.

In the present exemplary embodiment, however, attraction force of the magnet attraction portion 28A is applied to the magnet 18A fixed to the driving component 18 currently not receiving driving force of the electromagnetic coil 26. Therefore, the magnet 18A is forcibly attracted and pivoted to the position illustrated in Fig.24 even when the magnet 18A is positioned anywhere between the position "a" and the position "b" in Fig.24.

As illustrated in the front view of Fig.24, the movable waveguide component 10 is consequently set to be positioned along the vertical direction. In the condition, the antenna 7 illustrated in Fig.3 emits the radio waves W ahead of the main vehicle body 1 (in the forward direction) and receives the retuning radio waves W reflected ahead.

At least information vital to the automobile (i.e., information in the forward direction) can be thus obtained. This is quite useful for enhancing functions of the automobile.

### (Exemplary Embodiment 2)

An antenna device 206 according to another exemplary embodiment of the present invention will be hereinafter explained with reference to Figs.25 to 31.

It should be noted that the main elements of the antenna device 206 of the present exemplary embodiment are similar to those of the antenna device 6 of the aforementioned exemplary embodiment 1. Therefore, the antenna device 206 will be hereinafter explained only by focusing differences from the antenna device 6. Further, an identical reference numeral is assigned to a member of the present exemplary embodiment and a member of the aforementioned exemplary embodiment 1 when these members have an identical function. In this case, explanation of such member of the present exemplary embodiment will be hereinafter omitted for the sake of brevity of explanation.

Similarly to the antenna device 6 of the aforementioned exemplary embodiment 1, the antenna device 206 of the present exemplary embodiment is installed in the vicinity of the front center part of the main vehicle body 1 illustrated in Fig.1. The antenna device 206 is configured to forwardly emit the radio waves W of 76.5 GHz in a distance range from the front face of the main vehicle body 1 to roughly 150 m ahead at a predetermined horizontal angular range extended right and left with respect to the transverse center of the main vehicle body 1 (e.g., at an angular range including right and left angles respectively having 15 degrees (totally 30 degrees)), while sequentially scanning the angular range. Then, the antenna device 206 is configured to receive reflected waves from a position within the distance range of 150 m ahead at the emission angle of the radio waves. Accordingly, an object (e.g., another automobile travelling ahead or an obstruction such as a fallen object) can be detected within the distance range of 150 m ahead. A result of the detection can be used for executing various controls of the main vehicle body 1.

As illustrated in Figs.25 and 26, the antenna device 206 of the present exemplary embodiment is different from the antenna device 6 of the aforementioned exemplary embodiment 1 because a roughly circular movable waveguide component 210 is used instead of the roughly fan-shaped movable waveguide component 10. The following explanation mainly relates to the movable waveguide component 210, which is a difference from the aforementioned exemplary embodiment 1.

Specifically, the antenna device 206 is formed by a variety of elements illustrated in Fig.26.

A waveguide structure 208 includes the disc-shaped movable waveguide component 210, the immovable waveguide component 36, and the immovable waveguide component 12. The immovable waveguide component 36 is disposed in front of the movable waveguide component 210, whereas the immovable waveguide component 12 is disposed behind the movable waveguide component 210 (see Fig.26).

Amongst the elements, the movable waveguide component 210 will be firstly explained. The movable waveguide component 210 is formed by, for instance, a magnet. The magnet is made of a metal or a resin, and includes a metal film plated on the surface thereof. Further as illustrated in Figs.27 and 28, the movable waveguide component 210 includes four grooves 213 on each of the front and back surfaces thereof. The grooves 213 are disposed from the radial inner side to the radial outer side on the disc-shaped front/back surface while being radially separated at predetermined intervals. As illustrated in Fig.27, each groove 213 is circumferentially divided into three sections by imaginary dashed lines as boundaries under a condition that adjacent two imaginary dashed lines form a central angle of 120 degrees. Each groove section includes two through holes 214 in the front and rear ends thereof in the rotational direction (depicted by an arrow A). The though holes 214 penetrate the front and back surfaces of the movable waveguide component 210.

Explanation of the movable waveguide component 210 will be further continued. As described above, the movable waveguide component 210 is formed in a disc shape. The movable waveguide component 210 includes a through hole 215 (see Fig.28) in the center part thereof for allowing a shaft element to support the movable waveguide component 10 thereabout. A protrusion 218 of a hub 217 of a motor 216 illustrated in Fig.29 is inserted into the through hole 215. Under the condition, a clamper plate 219 is attached to the front surface of the movable waveguide component 210 as illustrated in Fig.28. A screw 220 is subsequently screwed and fixed into a screw hole 221 of the hub 217. The motor 216 can be thereby fixed to the movable waveguide component 210.

The clamper plate 219 is herein fixed to the movable waveguide component 210 while the outer periphery thereof covers the peripheral edge of the through hole 215 of the movable waveguide component 210.

As illustrated in Fig.29, the motor 216 includes a shaft 222 disposed in the center part of the hub 217. The screw hole 221 is formed in the front part of the shaft 222.

Further, the shaft 222 is rotatably supported by a bush 225 through bearings 223, 224 disposed back and forth.

Further, a coil 226 and a stator 227 are attached to the bush 225. Yet further, a yoke 228A and a magnet 228B are attached to the inner surface of the hub 217 opposed to the stator 227.

It should be noted that a fixation protrusion 225A is formed on the rear end of the bush 225. As illustrated in Fig.26, the fixation protrusion 225A is inserted and fixed into an opening 9B of a plate component 9A of the transceiver 9.

In other words, the movable waveguide component 210 is configured to rotate in a direction depicted by the arrow A in Fig.28 in conjunction with driving of the motor 216.

Explanation of the movable waveguide component 210 will be continued with reference back to Fig.28. A ring-shaped positional detector plate 210A is fixed to the front surface of the outer periphery of the movable waveguide component 210 by means of screws, as illustrated in Fig.30.

The positional detector plate 210A includes a plurality of openings 210B as a positional detector section. The openings 210B are circumferentially separated at predetermined intervals. As illustrated in Fig.30, a light transmitter/receiver element 210C is disposed along the back and forth direction of the openings 210B. The rotational position of the movable waveguide component 210 is detected through the detection of light intermittently penetrating through the openings 210B.

It should be noted that the rotational position of the movable waveguide component 210 may be configured to be detected by the positional detector section formed by a plurality of positional detector protrusions and a magnetic resistance element. The positional detector protrusions are herein disposed on the outer periphery of the disc-shaped movable waveguide component 210 while being separated at predetermined intervals. The magnetic resistance element is opposed to the positional detector protrusions.

Further, the main feature of the present exemplary embodiment is to prevent reduction in accuracy of detecting the rotational position to be caused by dust left attached to the positional detector section.

As specifically illustrated in Fig.27, a plurality of protrusions 244 are disposed on the radial inner side of the openings 210B formed for a positional detection objective as described above. The protrusions 244 prevents radio waves from leaking out of the grooves 213 (i.e., as radio wave leakage preventive protrusions). The protrusions 244 are concentrically aligned in a plurality of circles from the radial inner side to the radial outer side of the movable waveguide component 210.

When the movable waveguide component 210 is rotated under the condition, the protrusions 244 aligned on the radial outer side circulate faster than the protrusions 244 aligned on the radial inner side. In other words, pressure gradually gets lower than the standard atmosphere towards radial outward of the movable waveguide component 210. This results in generation of wind flowing from the radial inner side to the radial outer side on the movable waveguide component 210. As a result, dust and the like are prevented from being easily accumulated in the openings 210B formed in the radial outer part of the movable waveguide component 210. In other words, it is possible to prevent reduction in accuracy of detecting the rotational position to be caused by existence of dust and the like.

As described above, the immovable waveguide component 12 illustrated in Fig.26 is disposed behind the movable waveguide component 210 thus configured to rotate (e.g., at 4 rps), while being opposed to the movable waveguide component 210 at a predetermined interval in a noncontact state.

Explanation of the antenna device 206 will be continued with reference back to Fig.26. The transceiver 9, disposed behind the waveguide structure 208, is formed by a plate component 9A, the RF circuit unit 40, and the control unit 41. The RF circuit unit 40 and the control unit 41 are herein disposed behind the plate component 9A.

It should be noted that the casing 42, disposed in the rearmost position in Fig.26, sequentially houses the transceiver 9, the waveguide structure 208, and the antenna 7. Under the condition, the cover 43, having a radio wave transmissive property, is attached to the front surface of the casing 42, more specifically, to the front surface of the antenna 7.

In the automobile illustrated in Fig.1, an inter-vehicle distance between the automobile and another automobile travelling ahead is measured based on an instruction of the central controller (not illustrated in the figure) of the main vehicle body 1. The following case will be hereinafter explained. As illustrated in Fig.1, the central controller commands the control unit 41 to forwardly emit the radio waves W of 76.5 GHz at the angular range including the right and left angles respectively having 15 degrees (totally 30 degrees) and to receive reflected waves for controlling the speed of the automobile or exploring an obstruction existing ahead.

In this case, the control unit 41, illustrated in Fig.26, firstly receives the instruction and causes the RF circuit unit 40 to emit the radio waves W of 76.5 GHz.

The radio waves W pass through the power supply port 35 of the plate component 9A, and subsequently propagate into the power supply port 34 (see Fig.4) of the plate component 33 disposed behind the immovable waveguide component 12.

Accordingly, the radio waves W are supplied from the power supply port 34 to the power supply port 32 of the immovable waveguide component 12 (see Fig.5). The radio waves W are subsequently divided, and propagate into the divided eight grooves 31 through the so-called tournament power supply path illustrated in Fig.5. The radio waves W are then supplied from the through holes 30 to eight grooves 29 transversely divided on the front surface of the immovable waveguide component 12.

The grooves 213 of the movable waveguide component 210, explained with reference to Figs.27 and 28, are opposed to the grooves 29 at a predetermined interval. It should be noted that each groove 213 is circumferentially divided into three sections respectively having a central angle of 120 degrees, as described above.

Therefore, the opposed grooves, that is, the grooves 213 of the movable waveguide 210 and the grooves 29 of the immovable waveguide component 12, form a waveguide for the emitted radio waves W of 76.5 GHz on the back surface of the movable waveguide component 210. The radio waves W subsequently propagating through the waveguide and propagate into the front surface of the movable waveguide component 210 through the through holes 214.

It should be noted that the movable waveguide component 210 is rotated by the motor 216 as described above. The waveguide length is accordingly changes. The phase of the radio waves W thereby periodically changes in response to rotation of the movable waveguide component 210 when the radio waves W get to the front surface of the movable waveguide component 21 through the through holes 214.

The radio waves W, thus periodically changing the phase thereof, subsequently propagate into the grooves 37 of the immovable waveguide component 36 (see Fig.8) opposed to the front surface of the movable waveguide component 210 through a predetermined interval.

Similarly to the back surface of the movable waveguide component, the circular-arc shaped grooves 213 are formed on the front surface of the movable waveguide component 10 while being opposed to the circular-arc shaped grooves 37 transversely divided on the immovable waveguide component 36 illustrated in Fig.8. The radio waves W thereby propagate through the waveguide formed by the grooves 213 , 37.

The front surface of the movable waveguide component 210 is also rotated similarly to the back surface of the movable waveguide component 210. Accordingly, the waveguide length also changes on the front surface of the movable waveguide component 210. The phase of the radio waves W thereby periodically changes in response to rotation of the movable waveguide component 210 when the radio waves W propagate through the grooves 37.

The radio waves W subsequently pass through the through hole 38 illustrated in Fig.8 and propagate through the grooves 39 transversely divided and vertically extended on the front surface of the immovable waveguide component 36.

As illustrated in Fig.10, the transceiver ports 11a, 11b of the antenna 7 are disposed in front of the grooves 39 thus transversely divided and vertically extended. The radio waves W are emitted ahead of the main vehicle body illustrated in Fig.1 through the transceiver ports 11a, 11b.

Fig.31 is a chart showing a directivity of the antenna 7. As shown in Fig.31, it is predictable that a directivity angle of the antenna 7 roughly linearly changes.

It should be noted that oblique line segments in Fig.31 indicate a modification of an arc-sin wave and specifically linear portions are extracted from the arc-sin wave. However, the oblique line segments are herein linearly drawn for avoiding visual complexity of the figure.

Obviously from Fig.31, the directivity changes three times in a single revolution of the motor 216. As described above, this is due to the fact that the grooves 213 are formed on the movable waveguide component 210 while being divided into three sections respectively having a central angle of 120 degrees.

It should be noted that periods "a" and periods "b" are shown in Fig.31. The period "a" indicates a period required for the directivity to change, whereas the period "b" indicates an intermediate period between the previous and subsequent changes of the directivity. The periods "b" is herein set to be longer than the period "a" for allowing the control unit 41 to have enough time to analyze data of the reflected waves in the period "b",

It should be noted that the rotation angle of the movable waveguide component 210 is preferably directly detected for enhancing accuracy in detection of the emission angle of the radio waves W to be emitted from the transceiver ports 11a, 11b. In view of the above, the present exemplary embodiment adopts an angle detector mechanism illustrated in Fig.30 (i.e., the positional detector plate 210A, the openings 210B, and the light transmitter/receiver element 210C).

It should be noted that settings of the protrusions 244 according to the present exemplary embodiment illustrated in Figs.27 and 28 (i.e., arrangement, shape, height, and the like) are identical to those of the protrusions 44 according to the aforementioned exemplary embodiment 1. Therefore, the antenna device 206 can achieve the same advantageous effects as the antenna device 6 of the aforementioned exemplary embodiment 1 (e.g., leakage prevention of the radio waves, stabilization of the phase of the radio waves, and the like).

### <OTHER EXEMPLART EMBODIMENTS>

### (A)

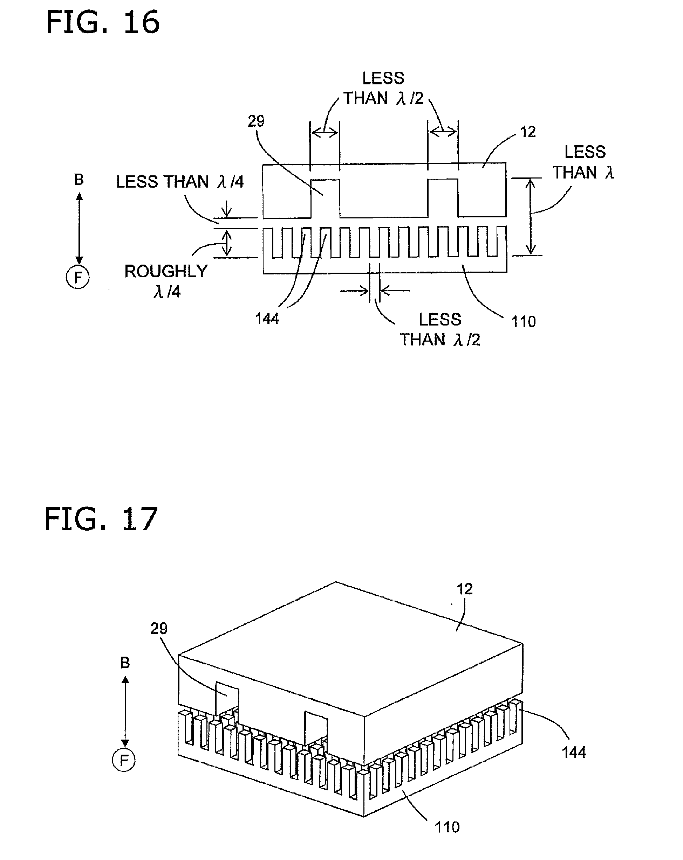

Figs.16 and 17 illustrate another exemplary embodiment of the present invention.

The aforementioned movable waveguide component 10 includes the grooves 13. In the present exemplary embodiment, however, the movable waveguide component 110 includes protrusions 144, respectively having a height of roughly λ/4, in the positions where the aforementioned grooves 13 are formed in the aforementioned exemplary embodiment.

In the aforementioned exemplary embodiment 1, the grooves 13, 29 form the waveguide. On the other hand, only the grooves 29 are formed in the present exemplary embodiment. However, only the grooves 29 sufficiently achieve propagation of the radio waves W.

In the movable waveguide component 10 including uniformly arranged protrusions respectively having a height of roughly λ/4, an electric field is allowed to be generated in the clearances among the protrusions 144 along a direction parallel to the top plane of the protrusions 144. On the other hand, an electric field is prevented from being generated along a direction perpendicular to the top plane of the protrusions 144. In other words, the top plane of the protrusions 144 respectively having a height of roughly λ/4 functions as a magnetic wall. Therefore, only the grooves 29 can form a high frequency waveguide.

Further, the protrusions 144, respectively having a height of roughly λ/4, are uniformly expanded on a plane arranged along a direction perpendicular to a direction parallel to the waveguide axis. Therefore, the protrusions 144 have a function of inhibiting the radio waves W from leaking out of the waveguide. Further, the protrusions 144 can produce the following condition. A stable magnetic wall is constantly generated in front of the openings of the grooves even when the first and second waveguide components (i.e., the movable waveguide component 110 and the immovable waveguide component 12) are relatively displaced not only in a direction parallel to the waveguide axis but also in a direction perpendicular to the waveguide axis. Therefore, it is possible to achieve an advantageous effect of stabilizing the phase of the radio waves W propagating through the waveguide. In other words, it is possible to form high frequency waveguide less influenced by accuracy of groove positions.

Although not illustrated in Figs.16 and 17, the relation between the movable waveguide component 10 and the immovable waveguide component 12, explained with reference to Figs.16 and 17, can be also applied to the relation between the movable waveguide component 10 and the immovable waveguide component 36.

### (B)

Figs.21 to 23 illustrate yet another exemplary embodiment of the present invention.

In the present exemplary embodiment, the movable waveguide component 110 includes the protrusions 144 in the waveguide section thereof instead of the grooves 13 formed in the aforementioned exemplary embodiment.

In the aforementioned exemplary embodiment 1, the grooves 13, 29 form the waveguide. On the other hand, only the grooves 29 are formed in the present exemplary embodiment. However, only the grooves 29 can form a waveguide and sufficiently achieve propagation of the radio waves. The waveguide length also herein changes. The phase of the radio waves also thereby changes.

In the movable waveguide component 110 including the uniformly arranged protrusions 144 respectively having a height of roughly λ/4, an electric field is allowed to be generated in the clearances among the protrusions 144 along a direction parallel to the top plane of the protrusions 144. However, an electric field is prevented from being generated along a direction perpendicular to the top plane of the protrusions 144. In other words, the top plane of the protrusions 144 respectively having a height of roughly λ/4 functions as a magnetic wall. Therefore, only the grooves 29 can form the high frequency waveguide.

Further, the protrusions 144, respectively having a height of roughly λ/4, are uniformly expanded on a plane arranged along a direction perpendicular to a direction parallel to the waveguide axis. Therefore, the protrusions 144 have a function of inhibiting the radio waves W from leaking out of the waveguide along a direction perpendicular to the waveguide axis. Simultaneously, the protrusions 144 can produce the following condition. A stable magnetic wall is constantly generated in front of the opening even when the first and second waveguide components (i.e., the movable waveguide component 110 and the immovable waveguide component 12) are displaced in a direction perpendicular to the waveguide axis. In other words, it is possible to achieve an advantageous effect of obtaining a phase shifter less influenced by accuracies in positions of the center axis of the movable members of the movable waveguide component 110 (i.e., the through hole 15, the cylindrical shaft 16, and the support shaft 23) and the like.

Although not illustrated in the figure, the relation between the movable waveguide component 110 and the immovable waveguide component 12, explained with reference to Figs.21 and 23, can be also applied to the relation between the movable waveguide component 110 and the immovable waveguide component 36.

As illustrated in Figs.6 to 8, the grooves 29 are formed on the immovable waveguide component 12 whereas the grooves 37 are formed on the immovable waveguide component 36, similarly in the relation among the movable waveguide component 110 and the two immovable waveguide components 12 , 36. Therefore, when the movable waveguide component 110 is moved, a distance is changed between the through hole 14 of the movable waveguide component 110 (see Fig.22) and the through hole 30, 38 of the immovable waveguide components 12, 36. The phase of the radio waves accordingly changes. Consequently, scanning can be executed at the aforementioned angular range including the right and left angles respectively having 15 degrees (totally 30 degrees) illustrated in Figs.1 and 2.

It should be noted that the movable waveguide component 210 of the aforementioned exemplary embodiment 2 may similarly include the aforementioned protrusions 244 in the groove 213. The aforementioned advantageous effects can be thereby achieved.

### INDUSTRIAL APPLICABILITY

The present invention relates to a high frequency waveguide for inhibiting leakage of radio waves. Therefore, the present invention is highly expected to be applied to various electronic apparatuses.

Further, the present invention is designed to compactly form the antenna device without configuring the antenna component to move. Simultaneously, the present invention is designed to form the antenna device in a simple structure. Therefore, the present invention is highly expected to be further applied to, for instance, the automobiles that size and weight reductions are promoted in terms of energy saving.

## Claims

1. A high frequency waveguide, comprising:
first and second waveguide components opposed each other at a predetermined interval of less than λ/4 (where λ is a wavelength of radio waves to be used);
an opened groove formed on at least either of opposed surfaces of the first and second waveguide components; and
a plurality of protrusions formed on at least either of the opposed surfaces of the first and second waveguide components, the plurality of protrusions being disposed in a surrounding of the groove formed on at least either of the first and second waveguide components, the plurality of protrusions respectively having a height of roughly λ/4.

2. The high frequency waveguide according to claim 1,
wherein the plurality of protrusions are adjacently disposed at intervals of less than λ/2.

3. The high frequency waveguide according to claim 1 or 2,
wherein the groove is formed on the first waveguide component, and
the protrusions are disposed on the second waveguide component, the protrusions being opposed to the groove and a surrounding of the groove.

4. The high frequency waveguide according to claim 3,
wherein a distance of less than λ is produced from a bottom surface of the groove formed on the first waveguide component to base ends of the protrusions disposed on the second waveguide component opposed to the first waveguide component.

5. The high frequency waveguide according to claim 1 or 2,
wherein the groove is formed on each of the first and second waveguide components, the grooves formed on the first and second waveguide components being opposed to each other, and
the protrusions are disposed on each of the opposed first and second waveguide components.

6. The high frequency waveguide according to claim 5,
wherein a distance of less than λ is produced from a bottom surface of the groove formed on the first waveguide component to a bottom surface of the groove formed on the second waveguide component opposed to the first waveguide component.

7. The high frequency waveguide according to any of claims 1 to 6,
wherein the groove has a width of less than λ/2.

8. An electronic apparatus, comprising;
the high frequency waveguide according to any of claims 1 to 7; and
a driving component configured to move at least one of the first and second waveguide components.

9. An antenna device, comprising:
an antenna including a first transceiver port and a second transceiver port;
a waveguide structure disposed behind the antenna, the waveguide structure forming a waveguide having a variable waveguide length to the first transceiver port and the second transceiver port; and
a transceiver disposed behind the antenna through the waveguide structure, the transceiver being configured to emit and receive radio waves outputted from or inputted into the first and second transceiver ports of the antenna.

10. The antenna device according to claim 9,
wherein the waveguide structure includes: a single or plurality of immovable waveguide components disposed in an immovable state; and a movable waveguide component configured to pivot with respect to the immovable waveguide component.

11. The antenna device according to claim 9 or 10,
wherein grooves formed on the immovable waveguide component and the movable waveguide component are formed in roughly circular-arc shapes, and
the antenna device further comprises a driving component configured to pivot the movable waveguide component with respect to the immovable waveguide component.

12. The antenna device according to claim 11,
wherein the movable waveguide component is formed in a roughly fan shape.

13. The antenna device according to claim 11, further comprising:
a fixed position returning unit configured to integrally move the driving component and the movable waveguide component to a predetermined initial position when the driving component stops functioning.

14. The antenna device according to claim 13,
wherein the fixed position returning unit includes: a magnet disposed on the driving component; and a magnet attraction portion opposed to the magnet.

15. The antenna device according to any of claims 11 to 14, further comprising:
a support axle configured to axis-support a base portion of the movable waveguide component,
wherein the driving component is integrated with the movable waveguide component, the driving component being disposed on the support axle on a back surface of the movable waveguide component.

16. The antenna device according to claim 15,
wherein the waveguide structure integrated with the driving component has a center of mass roughly matched with a center of mass of the support axle in a front view.

17. The antenna device according to claim 16, further comprising:
an electromagnetic coil attached to the driving component; and
a magnetic circuit disposed on front and back surfaces of the driving component.

18. The antenna device according to claim 9,
wherein the waveguide structure includes: an immovable waveguide component; and a roughly disc-shaped movable waveguide component configured to rotate with respect to the immovable waveguide component.

19. The antenna device according to claim 18,
wherein the disc-shaped movable waveguide component includes a plurality of grooves circumferentially divided, and the immovable waveguide component includes a plurality of grooves opposed to the plurality of grooves of the movable waveguide component.

20. The antenna device according to claim 19,
wherein the disc-shaped movable waveguide component is formed by circumferentially combining three grooves formed along the circumferential direction in a roughly fan-shaped area.

21. The antenna device according to any of claims 18 to 20, further comprising:
a positional detector section disposed closer to an outer periphery of the movable waveguide component.

22. The antenna device according to claim 21,
wherein the positional detector section includes: a plurality of openings formed in the outer periphery of the movable waveguide component at predetermined intervals; and a light transmitter/receiver element disposed closer to the openings.

23. The antenna device according to claim 21,
wherein the positional detector section includes: a plurality of positional detector protrusions disposed on the outer periphery of the movable waveguide component at predetermined intervals; and a magnetic resistance element opposed to the positional detector protrusions.

24. The antenna device according to any of claims 18 to 23, further comprising:
a plurality of protrusions respectively having a height of roughly λ/4, the plurality of protrusions being formed on at least either an inner radial side or an outer radial side of respective grooves formed on the movable waveguide component.

25. The antenna device according to any of claims 18 to 23, further comprising:
a plurality of protrusions respectively having a height of roughly λ/4, the plurality of protrusions being disposed in grooves formed on the movable waveguide component.

26. The antenna device according to any of claims 18 to 23, further comprising:
a plurality of protrusions respectively having a height of roughly λ/4, the plurality of protrusions being disposed in grooves on the immovable waveguide component opposed to the grooves on the movable waveguide component, the plurality of protrusions being disposed on at least either an inner radial side or an outer radial side of the respective grooves on the immovable waveguide component.

27. The antenna device according to any of claims 18 to 23,
wherein the movable waveguide component is opposed to grooves formed on the immovable waveguide component, and
the antenna device further comprising:
a plurality of radio wave leakage preventive protrusions disposed in the grooves of the immovable waveguide component and on at least either an inner radial side or an outer radial side of the grooves formed on the immovable waveguide component; and
through holes penetrating the movable waveguide component back and forth, the through holes being respectively disposed in a plurality of sets of the radio wave leakage preventive protrusions.

28. The antenna device according to any of claims 9 to 27,
wherein the waveguide structure has a disposition that the immovable waveguide components are respectively opposed to the front and back surfaces of the movable waveguide component at predetermined intervals.

29. The antenna device according to any of claims 9 to 28, further comprising:
a cover having a radio wave transmissive property, the cover being disposed in front of the antenna.

30. An electronic apparatus, comprising:
the antenna device according to any of claims 9 to 29; and
a transceiver device electrically connected to the transceiver.

31. The electronic apparatus according to claim 30,
wherein the antenna device is attached to the front part of a main body of an automobile.
